# EUROPÄISCHE PATENTSCHRIFT

(11) **EP 2 414 123 B1**
(45) Veröffentlichungstag und Bekanntmachung des Hinweises auf die Patenterteilung: **05.08.2020**
(21) Anmeldenummer: 10717496.3
(22) Anmeldetag: 19.03.2010
(51) Int. Cl.: B23B 51/04, B23B 51/06

(54) **EINLIPPEN-TIEFLOCHBOHRER**
SINGLE-EDGE GUN DRILL
FORET 3/4 À UNE SEULE ARÊTE DE COUPE

(30) Priorität: 01.04.2009 DE 102009015278
(43) Veröffentlichungstag der Anmeldung: 08.02.2012
(73) Patentinhaber: Botek Präzisionsbohrtechnik GmbH, 72585 Riederich (DE)
(72) Erfinder: DEEG, Jürgen, 72555 Metzingen (DE)
(74) Vertreter: Jakelski & Althoff Patentanwälte PartG mbB
(86) Internationale Anmeldenummer: PCT/DE2010/000307
(87) Internationale Veröffentlichungsnummer: WO 2010/111994

(56) Entgegenhaltungen:
- DE-A1- 2 522 565
- DE-A1- 3 807 195
- DE-A1- 4 413 932
- DE-U1- 20 321 368
- JP-A- 59 196 108
- JP-A- 60 221 209
- JP-U- 3 079 214
- US-A- 5 772 365

## Beschreibung

### Stand der Technik

Die Erfindung geht aus von einem Einlippen-Tieflochbohrer nach dem Oberbegriffs des unabhängigen Anspruchs 1 und wie aus der DE 25 22 565 A1 bekannt.

Einlippenbohrer werden im Allgemeinen als Tieflochbohrer eingesetzt. Derartige Einlippen-Tieflochbohrer sowie andere Ausgestaltungen von Tieflochbohrern sind in der VDI-Richtlinie VDI 3210 dargestellt. Die Einlippen-Tieflochbohrer werden hauptsächlich zur Herstellung von Bohrungen mit vergleichsweise kleinem Durchmesser eingesetzt, der vorwiegend im Bereich von 0,5 mm bis 50 mm liegt, wobei die Bohrtiefe jedoch ein Vielfaches des Bohrdurchmessers betragen kann.

Allgemein bestehen Einlippen-Tieflochbohrer aus einem Bohrkopf und einem Bohrerschaft mit einem Einspann-Ende. Am Bohrkopf ist eine Schneide ausgebildet, die sich von der Bohrermittelachse bis zum Bohrerumfang erstreckt. Weiterhin kann ein am Bohrerumfang angeordnetes Führungselement vorgesehen sein. Der Bohrkopf und der Bohrerschaft sind entweder formschlüssig miteinander verbunden oder sind aus einem Stück hergestellt. Vorhanden ist wenigstens ein im Bohrerschaft und Bohrkopf verlaufender Kanal, der am Bohrkopf und am Einspann-Ende Öffnungen aufweist. Durch diesen Kanal wird vom Einspann-Ende ausgehend Kühlmittel unter Druck zugeführt, das am Bohrkopf austritt und neben der Kühlung des Bohrkopfes beziehungsweise der Schneide insbesondere die Aufgabe hat, die beim Bohren entstehenden Späne durch eine im Bohrkopf und im Bohrerschaft vorhandene V-förmige Spanabfuhrnut herauszuspülen.

Aus der JP 60 221209 A geht ein BTA-Tieflochbohrer hervor, dessen Schneide einen Spanteiler aufweist, wobei der äußere Schneidbereich einen nach außen gekrümmten Umriss aufweist.

Das Dokument JP 3 079214 U betrifft ein Bohrwerkzeug mit einer austauschbaren Schneide. Die Schneide weist einen Spanbrecher auf, um einen während des Schneidvorgangs erzeugten Span an einer definierten Stelle zu brechen.

Aus der US 5 772 365 A geht ein Schneideinsatz hervor, wohingegen die DE 44 13 932 A1 einen Kanonenbohrer mit einem Körper offenbart, an dessen Ende eine Schneidspitze angeordnet ist, die ihrerseits eine Schneidkante aufweist. Die Schneidkante weist einen radial inneren Bereich mit einem konvex gekrümmten Schneidkantenteil und einen radial äußeren Bereich mit einem geraden Schneidkantenteil sowie einen Zwischenbereich auf, der aus einem konkaven Schneidkantenteil besteht, der sich seinerseits aus einem schrägen Teil und einem konkaven Teil zusammensetzt.

Die DE 38 07 195 A1 offenbart einen umstellbaren Schneideinsatz für ein drehbares Schneidwerkzeug.

Der in der DE 25 22 565 A1 beschriebene Einlippenbohrer enthält eine auswechselbare Schneide, die beidseitig eingesetzt werden kann. Die geradlinigen Schneidenumrisse auf beiden Schneidenseiten weisen jeweils eine Stufe auf, durch die ein Spanteiler realisiert wird.

Die in der JP 59 196108 A1 beschriebene Schneide eines Bohrers, die einen geradlinigen Umriss aufweist, enthält gemäß einem Ausführungsbeispiel eine Kerbe, die als Spanteiler wirkt. In einem anderen Ausführungsbeispiel ist eine Stufe in der geradlinigen Schneide vorgesehen, welche einen Hinterschnitt mit einem vorgegebenen Winkel aufweist.

Der in dem Gebrauchsmuster DE-G 74 41 010 beschriebene Bohrer weist zwei Schneiden auf. In beiden Schneiden sind rechteckförmige Aussparungen vorgesehen, die als Spanteiler wirken. Aufgrund der rechteckförmigen Aussparungen weist diese Spanteiler einen Hinterschnitt in Bezug auf die Bohrrichtung auf.

Der im Gebrauchsmuster DE 203 21 368 U1 beschriebene Einlippen-Tieflochbohrer weist einen Spanformer auf, der entlang der äußeren Schneide angeordnet ist und der ein Abbrechen der Bohrspäne bewirken soll, damit ein zuverlässiger Abtransport der Bohrspäne durch eine V-förmige Nut im Einlippen-Tieflochbohrer ermöglicht wird. Die Schneide des bekannten Einlippen-Tieflochbohrers weist einen geradlinigen Standard-Anschliff auf.

Ohne den zusätzlichen Einsatz eines Spanformers, wie beispielsweise bei dem im Gebrauchsmuster DE 203 21 368 U1 beschriebenen Einlippen-Tieflochbohrer, weisen die bekannten Einlippen-Tieflochbohrer das Problem auf, dass bei einer zunehmenden Vorschubrate (Vorschub/Umdrehung) die Formung der Bohrspäne immer ungünstiger wird, wobei insbesondere lange Späne entstehen können. Das Problem tritt auch bei Ausgestaltungen von Einlippenbohrern auf, deren Schneide einen Spanteiler aufweist, wie beispielsweise in der JP 59 196108 A1 beschrieben.

Bei den bekannten Bohrern wird der Abtransport der Bohrspäne immer unzuverlässiger und es kann zu einem Spänestau kommen, bei welchem sich die Bohrspäne zwischen der Bohrungswand und der Spanabfuhrnut verklemmen. Ein Bohrerbruch kann dann nicht mehr ausgeschlossen werden, der im Allgemeinen zur Folge hat, dass das zu bohrende Werkstück nicht mehr verwendbar ist.

Der Erfindung liegt die Aufgabe zugrunde, einen Einlippen-Tieflochbohrer anzugeben, der eine hohe Vorschubrate ermöglicht.

Die Aufgabe wird durch die im unabhängigen Anspruch angegebenen Merkmale gelöst.

### Offenbarung der Erfindung

Die Erfindung geht von einem Einlippen-Tieflochbohrer aus, der eine Schneide aufweist, in welcher wenigstens ein Spanteiler vorgesehen ist, der die Schneide in einen inneren und äußeren Schneidenbereich teilt und als Nut oder Stufe realisiert ist und bei dem der äußere Schneidenbereich einen nach außen gekrümmten Umriss aufweist. Der nach außen gekrümmte Umriss kann gleichermaßen als Wölbung nach außen oder als konvexer Umriss bezeichnet werden. Der erfindungsgemäße Einlippen-Tieflochbohrer zeichnet sich dadurch aus, dass der nach außen gekrümmte Umriss durch wenigstens einen Kreisbogen realisiert ist. Gegebenenfalls können mehrere ineinander übergehende Kreisbögen vorgesehen sein, bei denen sowohl unterschiedliche Kreismittelpunkte als auch unterschiedliche Radien vorgesehen sein können.

Der erfindungsgemäße Einlippen-Tieflochbohrer ermöglicht insbesondere eine gegenüber den bekannten Einlippen-Tieflochbohrern höhere Vorschubrate, die in einer industriellen Fertigung eine entsprechend höhere Fertigungsgeschwindigkeit gestattet. Erreicht werden konnte eine bis zu dreifach höhere Vorschubrate als mit den bekannten Einlippen-Tieflochbohrern.

Die Verbesserungen werden durch eine vorteilhafte Formung der beim Bohren entstehenden Späne erzielt. Der Spanteiler sorgt für eine Teilung des Spans in Längsrichtung, sodass die Spanbreite begrenzt wird. Anhand von Versuchen wurde festgestellt, dass in Kombination mit der Ausgestaltung des äußeren Schneidenbereichs, der den nach außen gekrümmten Umriss aufweisen soll, kurz brechende Späne entstehen. Durch die sowohl in der Breite als auch in der Länge begrenzten Späne ist ein zuverlässiger Abtransport der Späne in der Spanabfuhrnut durch das Kühlmittel gewährleistet.

Dadurch wird mit dem erfindungsgemäßen Einlippen-Tieflochbohrer eine hohe Prozess-Sicherheit erzielt. Insbesondere wird ein Bohrerbruch, der die Zerstörung des zu bohrenden Werkstücks zur Folge hätte, durch das Vermeiden einer Verstopfung der Spanabfuhrnut zuverlässig vermieden.

Der erfindungsgemäße Einlippen-Tieflochbohrer weist daher insgesamt erhebliche Vorteile beim Einsatz insbesondere in der industriellen Serienfertigung auf.

Vorteilhafte Ausgestaltungen und Weiterbildungen des erfindungsgemäßen Einlippen-Tieflochbohrers ergeben sich aus den abhängigen Ansprüchen.

Eine vorteilhafte Maßnahme sieht vor, dass der gesamte äußere Schneidenbereich den nach außen gekrümmten Umriss aufweist.

Eine Ausgestaltung eines Kreisbogens sieht vor, dass der Mittelpunkt des wenigstens einen Kreisbogens auf der Bohrermittelachse liegt. Weiterhin kann alternativ oder zusätzlich vorgesehen sein, dass der Radius des Kreisbogens dem halben Bohrerdurchmesser entspricht. Weiterhin kann alternativ oder zusätzlich vorgesehen sein, dass der Mittelpunkt des Kreisbogens einen halben Bohrerdurchmesser vom vorderen Ende des Bohrkopfes entfernt ist. Mit diesen Maßnahmen, die einzeln oder in Kombinationen vorgesehen sein können, kann der wenigstens eine Kreisbogen besonders einfach realisiert werden.

In einer Ausgestaltung können wenigstens eine Gerade und wenigstens ein Kreisbogen kombiniert sein.

Eine Ausgestaltung sieht vor, dass der äußere Schneidenbereich eine Schneidecke beim Übergang der Schneide zum Umfang des Bohrkopfes aufweist. Die Schneidecke wird vorteilhafterweise dadurch realisiert, dass der Radius des wenigstens einen Kreisbogens gleich oder größer ist als der halbe Bohrerdurchmesser und dass der Mittelpunkt bezogen auf die Bohrermittelachse nach außen versetzt ist.

Eine vorteilhafte Ausgestaltung sieht vor, dass die Anzahl der Spanteiler in Abhängigkeit vom Durchmesser des Einlippen-Tieflochbohrers festgelegt ist, wobei mit zunehmendem Bohrerdurchmesser entsprechend mehrere Spanteiler vorgesehen sein können.

Eine andere Ausgestaltung sieht vor, dass der Spanteiler einen Freischnittwinkel bezogen auf eine Parallele zur Bohrermittelache von größer 0° aufweist. Der dadurch entstehende Hinterschnitt des Spanteilers bildet gewissermaßen eine Schneide und erhöht die Zuverlässigkeit der Spanteilung. Eine Weiterbildung dieser Ausgestaltung sieht vor, dass der Freischnittwinkel in Abhängigkeit vom Material des zu bohrenden Werkstücks festgelegt ist. Der Freischnittwinkel liegt vorzugsweise in einem Bereich von 1° bis 60°, speziell im Bereich von 8° bis 12° oder ganz speziell bei wenigstens näherungsweise 10°.

Eine andere Ausgestaltung betrifft den Bereich des Spanteiler-Positionswinkels, in welchem der Spanteiler in der Schneide vorgesehen ist, bezogen auf die Bohrermittelachse und bezogen auf den Bohrerdurchmesser, wobei der Bereich des Spanteiler-Positionswinkels vorzugsweise in Abhängigkeit vom Bohrerdurchmesser festgelegt ist. Vorzugsweise liegt der Spanteiler-Positionswinkel im Bereich von 20° bis 50°. Mit zunehmendem Bohrerdurchmesser kann der Spanteiler-Positionswinkel zunehmen. Der Spanteiler-Positionswinkel kann sich auf die der Bohrermittelachse nächstliegende Flanke des Spanteilers beziehen oder bei einer Realisierung des Spanteilers als Nut alternativ auch die Mittellinie der Nut.

Eine Ausgestaltung sieht vor, dass der Einlippen-Tieflochbohrer aus einem Bohrkopf und einem Bohrerschaft zusammengesetzt ist oder dass der Bohrkopf und der Bohrerschaft aus einem Stück hergestellt sind. Alternativ kann ein auswechselbarer Bohrkopf vorgesehen sein.

Weitere Ausgestaltungen betreffen den Bohrkopf, der aus Hartmetall hergestellt sein kann und/oder mit einer Beschichtung, beispielsweise einer Hartstoffschicht versehen sein kann. Mit diesen Maßnahmen kann die Standzeit des Einlippen-Tieflochbohrers erheblich verlängert werden.

Gemäß einer anderen Maßnahme ist der Bohrkopf als Träger ausgestaltet, an welchem wenigstens die Schneide und/oder wenigstens ein Führungselement angeordnet sind. Vorzugsweise sind die Schneide und/oder das Führungselement auswechselbar befestigt.

Weitere vorteilhafte Weiterbildungen und Ausgestaltungen des erfindungsgemäßen Einlippen-Tieflochbohrers ergeben sich aus der folgenden Beschreibung. Ausführungsbeispiele der Erfindung sind in der Zeichnung dargestellt und in der nachfolgenden Beschreibung näher erläutert.

Es zeigen:
Figur 1 einen Einlippen-Tieflochbohrer gemäß dem Stand der Technik,
Figur 2 ein Ausführungsbeispiel eines erfindungsgemäßen Einlippen-Tieflochbohrers,
Figur 3 eine erste Ausgestaltung einer Schneide des erfindungsgemäßen Einlippen-Tieflochbohrers,
Figur 4 ein Detail der in Figur 3 gezeigten Ausgestaltung der Schneide,
Figur 5 eine andere Ausgestaltung einer Schneide des erfindungsgemäßen Einlippen-Tieflochbohrers,
Figur 6 ein Detail der in Figur 5 gezeigten Ausgestaltung der Schneide und
Figur 7 eine weitere Ausgestaltung des erfindungsgemäßen Einlippen-Tieflochbohrers.

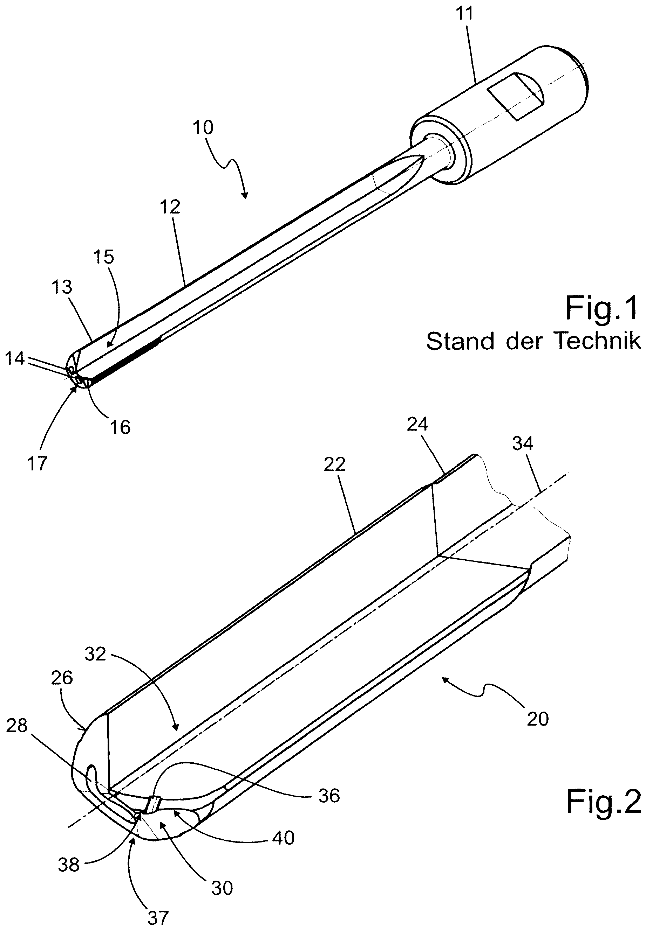

Figur 1 zeigt einen Einlippen-Tieflochbohrer 10, wie er aus dem Stand der Technik bekannt ist. Der Einlippen-Tieflochbohrer 10 enthält ein Einspann-Ende 11 zur Aufnahme des Einlippen-Tieflochbohrers 10 in ein in Figur 1 nicht näher gezeigtes Bohrfutter, und einen Bohrerschaft 12 mit einem Bohrkopf 13. Der Bohrerschaft 12 und der Bohrkopf 13 sind einstückig und formschlüssig realisiert. Im Bohrerschaft 12 ist wenigstens ein Kühlmittelkanal 14 vorgesehen, der am vorderen Ende des Bohrkopfes 13 mündet. Das durch den Kühlmittelkanal 14 gepumpte Kühlmittel hat nicht nur die Aufgabe, den Bohrkopf 13 zu kühlen, sondern dient auch zum Abtransport der beim Bohren entstehenden Späne durch eine V-förmige Spanabfuhrnut 15, die an der Schneide 16 des Einlippen-Tieflochbohrers 10 beginnt und sich nahezu über die gesamte Länge des Bohrerschafts 12 erstreckt. Die Schneide 16 eines derartigen bekannten Einlippen-Tieflochbohrers ist als Gerade realisiert, die gegebenenfalls einen in Figur 1 nicht näher gezeigten Spanteiler enthalten kann. Weiterhin kann ein Führungselement 17 am Umfang des Bohrkopfes 13 vorgesehen sein.

Figur 2 zeigt eine Teilansicht eines erfindungsgemäßen Einlippen-Tieflochbohrers 20, von welchem der Bohrkopf 22 sowie ein Teil des Bohrerschafts 24 gezeigt sind. Gemäß einer Ausgestaltung können der Bohrkopf 22 und der Bohrerschaft 24 einstückig realisiert sein. Eine weitere Ausgestaltung sieht vor, dass der Bohrkopf 22 austauschbar ist, wodurch der erfindungsgemäße Einlippen-Tieflochbohrer 20 an unterschiedliche Bohraufgaben angepasst werden kann und wodurch das wesentliche Verschleißteil ersetzt werden kann. Vorzugsweise sind der Bohrkopf 22 und der Bohrerschaft 24 formschlüssig miteinander verbunden.

Gemäß einer Ausgestaltung ist zumindest der Bohrkopf 22 aus Hartmetall hergestellt. Sofern der Bohrkopf 22 aus einem preiswerteren Material hergestellt ist, kann eine Beschichtung 26 vorzugsweise mit einem Hartstoff zumindest des Bohrkopfes 22 vorgesehen sein, wobei eine Beschichtung 26 jedoch auch bei einem Hartmetall-Bohrkopf 22 zur zusätzlichen Standzeitverbesserung vorgesehen sein kann.

Der erfindungsgemäße Einlippen-Tieflochbohrer 20 weist wenigstens einen Kühlmittelkanal 28 auf, durch welchen ein Kühlmittel gepumpt wird. Das Kühlmittel dient einerseits zum Kühlen des Bohrkopfes 22, hauptsächlich des vorderen Teils des Bohrkopfes 22, insbesondere einer Schneide 30 des Einlippen-Tieflochbohrers 20 und andererseits zum Abtransport der beim Bohren entstehenden Späne durch die vorzugsweise V-förmige Spanabfuhrnut 32.

Am Umfang des Bohrkopfes 22 kann wenigstens ein Führungselement 37 vorgesehen sein.

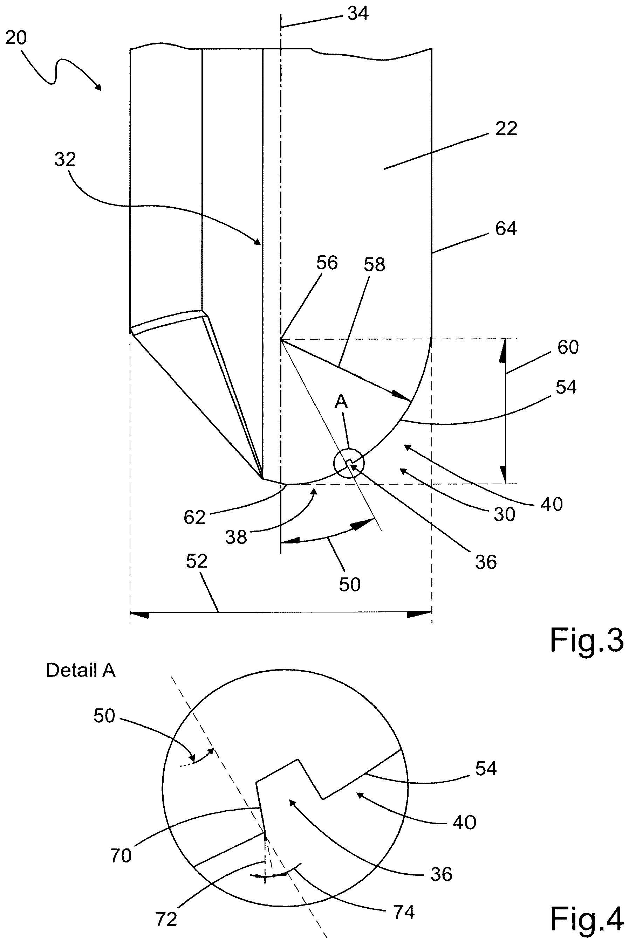

Die Schneide 30 des erfindungsgemäßen Einlippen-Tieflochbohrers 20, die beim Bohren um die Bohrermittelachse 34 rotiert, enthält wenigstens einen Spanteiler 36, welcher die Schneide 30 in einen inneren Schneidenbereich 38 und einen äußeren Schneidenbereich 40 aufteilt. Der äußere Schneidenbereich 40 weist einen nach außen gekrümmten Umriss auf. Der nach außen gekrümmte Umriss kann auch als Wölbung nach außen oder als konvexe Krümmung bezeichnet werden. Die folgenden Figuren 3 bis 9 verdeutlichen anhand von Ausführungsbeispielen den nach außen gekrümmten Umriss im äußeren Schneidenbereich 40 der Schneide 30.

Figur 3 zeigt eine erste Ausgestaltung der Schneide 30 des erfindungsgemäßen Einlippen-Tieflochbohrers 20. Diejenigen in Figur 3 gezeigten Teile, die mit den in Figur 2 gezeigten Teilen übereinstimmen, sind jeweils mit denselben Bezugszeichen versehen. Diese Vereinbarung gilt sinngemäß auch für die folgenden Figuren. Der Spanteiler 36 ist, bezogen auf die Bohrermittelachse 34, bei einem vorgegebenen Spanteiler-Positionswinkel 50 in der Schneide 30 vorgesehen. Hierbei soll sich der Spanteiler-Positionswinkel 50 auf den Beginn des Spanteilers 50 bezogen auf die Bohrermittelachse 34 und in Relation zum Bohrerdurchmesser 52 des Einlippen-Tieflochbohrers 20 beziehen.

Der Spanteiler-Positionswinkel 50 liegt insbesondere in einem Winkelbereich von 20° bis 50°. Vorzugsweise hängt der Spanteiler-Positionswinkel 50 vom Durchmesser 52 des Einlippen-Tieflochbohrers 20 ab, wobei der Spanteiler-Positionswinkel 50 mit zunehmendem Durchmesser 52 ebenfalls größer wird. Bei einem Bohrerdurchmesser 52 von beispielsweise 3 mm beträgt der Spanteiler-Positionswinkel 50 beispielsweise 30°, während bei einem Bohrerdurchmesser 52 von beispielsweise 5 mm der Spanteiler-Positionswinkel 50 bei beispielsweise 40° liegt.

Das in Figur 3 gezeigte Ausführungsbeispiel geht von einer Realisierung des nach außen gekrümmten Umrisses der Schneide 30 im äußeren Schneidenbereich 40 mit einem Kreisbogen 54 aus, der sich im gezeigten Ausführungsbeispiel vorzugsweise über den gesamten äußeren Schneidenbereich 40 erstreckt. Der Kreisbogen 54, dessen Mittelpunkt 56 auf der Bohrermittelachse 34 liegen soll, weist einen vorgegebenen Radius 58 auf.

Gemäß einer Ausgestaltung ist vorgesehen, dass der Mittelpunkt 56 des Kreisbogens 54 einen halben Durchmesser 60, entsprechend dem Betrag des Radius 58, vom vorderen Ende 62 des Bohrkopfes 22 entfernt auf der Bohrermittelachse 34 liegt. Im gezeigten Ausführungsbeispiel ist weiterhin davon ausgegangen, dass der Kreisbogen 54 stetig und differenzierbar in den äußeren Umfang 64 des Bohrkopfes 22 übergeht. Die Begriffe "stetig" und "differenzierbar" beziehen sich auf eine mathematische Beschreibung des Umrisses als Kurvenverlauf.

Gemäß einer anderen Ausgestaltung können mehrere Kreisbögen 54 im äußeren Schneidenbereich 40 vorgesehen sein, die den nach außen gekrümmten Umriss realisieren. Die einzelnen Kreisbögen gehen stetig, jedoch nicht differenzierbar ineinander über.

Gemäß einer anderen Ausgestaltung können mehrere Spanteiler 36 in der Schneide 30 vorgesehen sein. In diesem Fall weist zumindest der äußerste Schneidenbereich den nach außen gekrümmten Umriss auf. Vorzugsweise weisen sämtliche äußeren Schneidenbereiche ab dem ersten Spanteiler 36 einen nach außen gekrümmten Umriss auf. Die Anzahl der Spanteiler 36 hängt vorzugsweise vom Bohrerdurchmesser 52 des Einlippen-Tieflochbohrers 20 ab. Ebenso können die einzelnen Spanteiler-Positionswinkel 50 in Abhängigkeit vom Bohrerdurchmesser 52 des Einlippen-Tieflochbohrers 20 abhängen.

Bei dem in Figur 3 gezeigten Ausführungsbeispiel weist auch der innere Schneidenbereich 38 der Schneide 30 einen nach außen gekrümmten Umriss auf, der im gezeigten Ausführungsbeispiel ebenfalls den vorgegebenen Radius 58 des Kreisbogens 54 im äußeren Schneidenbereich 40 aufweisen kann.

Das in Figur 3 eingezeichnete Detail A, welches den Positionsbereich des Spanteilers 36 betrifft, ist in Figur 4 vergrößert dargestellt. Figur 4 verdeutlicht zunächst, dass der Spanteiler 36 als Kerbe in der Schneide 30 realisiert ist. Die auf die Bohrermittelachse 34 bezogene erste Flanke 70 des Spanteilers 36 soll einen vorgegebenen Spanteiler-Freischnittwinkel 74 bezogen auf eine Parallele 72 zur Bohrermittelachse 34 aufweisen. Der Spanteiler-Freischnittwinkel 74 liegt vorzugsweise in einem Winkelbereich von 1 ° bis 60° bezogen auf die Parallele 72 zur Bohrermittelachse 34. Eine besonders vorteilhafte Spanformung wurde in einem Bereich des Spanteiler-Freischnittwinkels 74 von 8° bis 12° festgestellt. Vorzugsweise wird der Spanteiler-Freischnittwinkel 74 daher wenigstens näherungsweise auf 10° festgelegt.

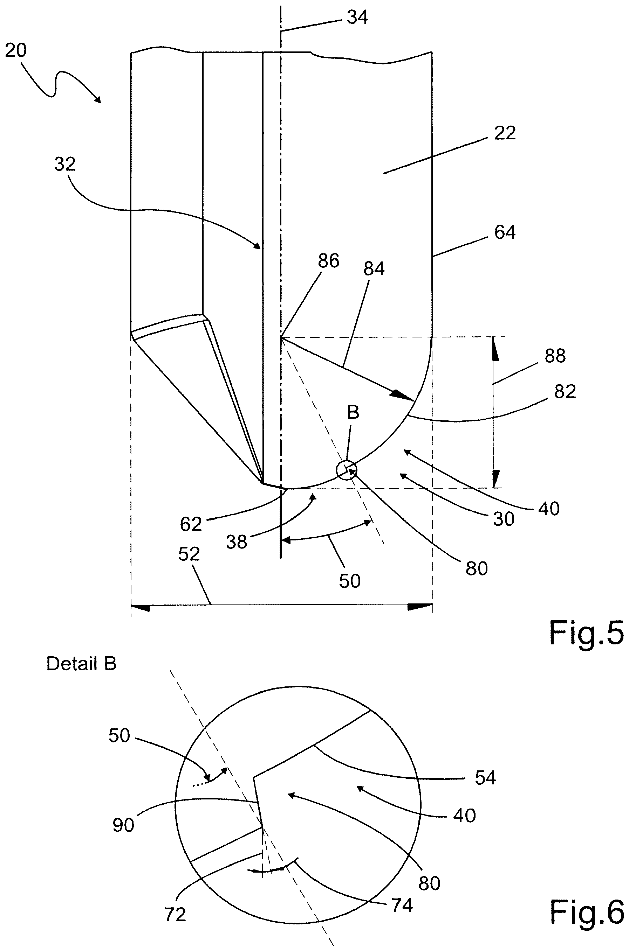

Figur 5 zeigt ein Ausführungsbeispiel, bei welchem der wenigstens eine Spanteiler 80 als Stufe realisiert ist. Weiterhin wird bei dem in Figur 5 gezeigten Ausführungsbeispiel davon ausgegangen, dass der nach außen gekrümmte Umriss im äußeren Schneidenbereich 40 als ein Kreisbogen 82 realisiert ist, der einen Radius 84 aufweist, dessen Mittelpunkt 86 im gezeigten Ausführungsbeispiel auf der Bohrermittelachse 34 liegen soll. Bei dieser Konstellation ist der Abstand 88 des Mittelpunkts 86 bezogen auf das vordere Ende 62 des Einlippen-Tieflochbohrers 20 größer als der Radius 84, wenn davon ausgegangen wird, dass der Kreisbogen 82 stetig und differenzierbar in den äußeren Umfang 64 des Bohrkopfes 22 übergehen soll.

Das in Figur 5 eingezeichnete Detail B, welches den Positionsbereich des Spanteilers 80 betrifft, ist in Figur 6 vergrößert dargestellt. Figur 6 verdeutlicht zunächst, dass der Spanteiler 80 als Stufe in der Schneide 30 realisiert ist. Die auf die Bohrermittelachse 34 bezogene Flanke 90 des Spanteilers 80 soll, bezogen auf eine Parallele 72 zur Bohrermittelachse 34, wieder einen Spanteiler-Freischnittwinkel 74 aufweisen, der in einem Winkelbereich von 1° bis 60° bezogen auf die Parallele 72 zur Bohrermittelachse 34 liegen kann. Eine besonders vorteilhafte Spanformung wurde auch hier in einem Bereich des Spanteiler-Freischnittwinkels 74 von 8° bis 12° festgestellt. Vorzugsweise wird der Spanteiler-Freischnittwinkel 74 daher wieder wenigstens näherungsweise auf 10° festgelegt.

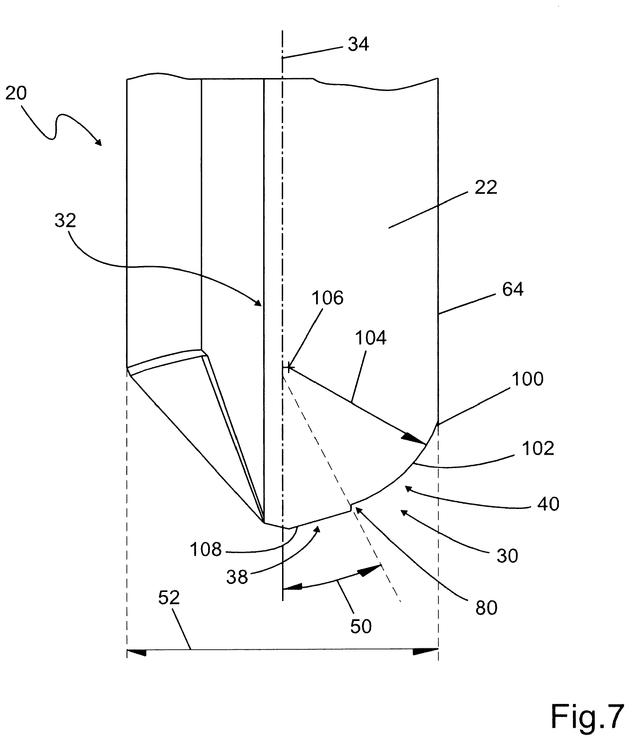

Das in Figur 7 gezeigte Ausführungsbeispiel unterscheidet sich von den in den vorangegangenen Figuren gezeigten Ausführungsbeispielen im Wesentlichen dadurch, dass beim Übergang des äußeren Schneidenbereichs 40 in den äußeren Umfang 64 des Bohrkopfes 22 eine Schneidecke 100 auftreten soll, sodass der Übergang an der Schneidecke 100 zwar stetig, aber nicht differenzierbar ist. Exemplarisch ist hierbei von einer Realisierung des Spanteilers 80 als Stufe ausgegangen. Weiterhin ist exemplarisch von einer Realisierung der Schneide 30 im äußeren Schneidenbereich 40 als Kreisbogen 102 ausgegangen, welcher einen Radius 104 aufweist, dessen Mittelpunkt 106 jedoch gegenüber der Bohrermittelachse 34 nach außen versetzt ist. Das in Figur 7 dargestellte Ausführungsbeispiel zeigt darüber hinaus eine Realisierung der Schneide 30 im inneren Schneidenbereich 38 als eine Gerade 108.

Bei den Ausgestaltungen des erfindungsgemäßen Einlippen-Tieflochbohrers 20 mit mehr als einem Spanteiler 36, 80 können sämtliche Spanteiler 36, 80 als Nut oder sämtliche Spanteiler 36, 80 als Stufe oder auch gemischt als Nut und Stufe realisiert sein.

Eine vorteilhafte Weiterbildung sieht vor, dass der Bohrkopf 22 des erfindungsgemäßen Einlippen-Tieflochbohrers 20 als Träger ausgebildet ist, an welchem die Schneide 20 mit dem wenigstens einen Spanteiler 36, 80 und/oder das wenigstens eine Führungselement 37 angebracht sind, die vorzugsweise austauschbar sind. Auf die gegebenenfalls mögliche Austauschbarkeit der Schneide 30 wurde bereits hingewiesen. Somit können sämtliche, dem hauptsächlichen Verschleiß des erfindungsgemäßen Einlippen-Tieflochbohrers 20 ausgesetzten Teile ausgetauscht werden.

## Patentansprüche

1. Einlippen-Tieflochbohrer mit einer Schneide (30), in der wenigstens ein Spanteiler (36, 80) vorgesehen ist, welcher als Nut oder Stufe realisiert ist und welcher die Schneide (30) in einen inneren Schneidenbereich (38) und wenigstens einen äußeren Schneidenbereich (40) teilt, wobei der wenigstens eine äußere Schneidenbereich (40) einen nach außen gekrümmten Umriss aufweist, **dadurch gekennzeichnet, dass** der nach außen gekrümmte Umriss durch wenigstens einen Kreisbogen (54, 82, 102) realisiert ist.

2. Einlippen-Tieflochbohrer nach Anspruch 1, **dadurch gekennzeichnet, dass** der gesamte äußere Schneidenbereich (40) einen nach außen gekrümmten Umriss aufweist.

3. Einlippen-Tieflochbohrer nach Anspruch 1, **dadurch gekennzeichnet, dass** der Mittelpunkt (56) des wenigstens einen Kreisbogens (54, 82) auf der Bohrermittelachse (34) liegt.

4. Einlippen-Tieflochbohrer nach Anspruch 3, **dadurch gekennzeichnet, dass** der Radius (58, 84) des Kreisbogens (54, 82) dem halben Bohrerdurchmesser (52) entspricht.

5. Einlippen-Tieflochbohrer nach Anspruch 4, **dadurch gekennzeichnet, dass** der Abstand (60, 88) des Mittelpunkts (56) des wenigstens einen Kreisbogens (54, 82) einen halben Bohrerdurchmesser (52) vom vorderen Ende des Bohrkopfes (22) entfernt ist.

6. Einlippen-Tieflochbohrer nach Anspruch 1, **dadurch gekennzeichnet, dass** der nach außen gekrümmte Umriss durch wenigstens eine Gerade (110, 112) und wenigstens einen Kreisbogen (54, 82, 102) realisiert ist.

7. Einlippen-Tieflochbohrer nach Anspruch 1, **dadurch gekennzeichnet, dass** der äußere Schneidenbereich (40) eine Schneidecke (100) am Übergang der Schneide (30) zum Umfang (64) des Bohrkopfes (22) aufweist.

8. Einlippen-Tieflochbohrer nach Anspruch 1 und 7, **dadurch gekennzeichnet, dass** die Schneidecke (100) dadurch gebildet ist, dass der Radius (104) des die Schneidecke (100) formenden Kreisbogens (102) gleich oder größer als der halbe Durchmesser (52) des Einlippen-Tieflochbohrers (20) ist und dass der Mittelpunkt (106) bezogen auf die Bohrermittelachse (34) nach außen versetzt ist.

9. Einlippen-Tieflochbohrer nach Anspruch 1, **dadurch gekennzeichnet, dass** die Anzahl der Spanteiler (36, 80) in Abhängigkeit vom Bohrdurchmesser (52) festgelegt ist.

10. Einlippen-Tieflochbohrer nach Anspruch 1, **dadurch gekennzeichnet, dass** der Spanteiler (36, 80) einen Spanteiler-Freischnittwinkel (74) bezogen auf die Bohrermittelachse (34) von größer 0° aufweist.

11. Einlippen-Tieflochbohrer nach Anspruch 10, **dadurch gekennzeichnet, dass** der Spanteiler-Freischnittwinkel (74) in Abhängigkeit vom Material des zu bohrenden Werkstücks festgelegt ist.

12. Einlippen-Tieflochbohrer nach Anspruch 10, **dadurch gekennzeichnet, dass** der Spanteiler-Freischnittwinkel (74) im Bereich von 8° bis 12° liegt.

13. Einlippen-Tieflochbohrer nach Anspruch 1, **dadurch gekennzeichnet, dass** der Spanteiler-Positionswinkel (50), welcher die Position des Spanteilers (36, 80) in der Schneide (30) festgelegt, in einem Winkelbereich von 20° bis 50° bezogen auf die Bohrermittelachse (34) und in Bezug auf den Bohrerdurchmesser (52) liegt.

14. Einlippen-Tieflochbohrer nach Anspruch 13, **dadurch gekennzeichnet, dass** der Spanteiler-Positionswinkel (50) in Abhängigkeit vom Bohrerdurchmesser (52) festgelegt ist.

15. Einlippen-Tieflochbohrer nach Anspruch 1, **dadurch gekennzeichnet, dass** der Einlippen-Tieflochbohrer (20) einen Bohrkopf (22) und einen Bohrerschaft (24) enthält und dass der Bohrkopf (22) sowie der Bohrerschaft (24) aus einem Stück hergestellt sind.

16. Einlippen-Tieflochbohrer nach Anspruch 1, **dadurch gekennzeichnet, dass** der Einlippen-Tieflochbohrer (20) aus einem Bohrkopf (22) und einem Bohrerschaft (24) zusammengesetzt ist.

17. Einlippen-Tieflochbohrer nach Anspruch 16, **dadurch gekennzeichnet, dass** der Bohrkopf (22) auswechselbar ist.

18. Einlippen-Tieflochbohrer nach einem der Ansprüche -16 - 17, **dadurch gekennzeichnet, dass** zumindest der Bohrkopf (22) aus Hartmetall hergestellt ist.

19. Einlippen-Tieflochbohrer nach einem der Ansprüche -16- 18, **dadurch gekennzeichnet, dass** zumindest der Bohrkopf (22) wenigstens teilweise mit einer Beschichtung (26) versehen ist.

20. Einlippen-Tieflochbohrer nach einem der Ansprüche 16 - 19, **dadurch gekennzeichnet, dass** der Bohrkopf (22) als Träger ausgestaltet ist, an welchem wenigstens die Schneide (30) und/oder wenigstens ein Führungselement (37) angebracht sind.

21. Einlippen-Tieflochbohrer nach Anspruch 20, **dadurch gekennzeichnet, dass** die Schneide (30) und/oder das wenigstens eine Führungselement (37) auswechselbar angebracht sind.

## Claims

1. Single-fluted deep hole drill having a cutting edge (30), in which at least one chip splitter (36, 80) is provided, which is implemented as a groove or a step and which divides the cutting edge (30) into an inner cutting region (38) and at least one outer cutting region (40), wherein the at least one outer cutting region (40) has an outwardly curved outline, **characterised in that** the outwardly curved outline is implemented by at least one circular arc (54, 82, 102).

2. Single-fluted deep hole drill according to claim 1, **characterised in that** the entire outer cutting region (40) has an outwardly curved outline.

3. Single-fluted deep hole drill according to claim 1, **characterised in that** the centre (56) of the at least one circular arc (54, 82) lies on the central axis of the drill (34).

4. Single-fluted deep hole drill according to claim 3, **characterised in that** the radius (58, 84) of the circular arc (54, 82) corresponds to half the drill diameter (52).

5. Single-fluted deep hole drill according to claim 4, **characterised in that** the distance (60, 88) of the centre (56) of the at least one circular arc (54, 82) from the front end of the drill head (22) is half the drill diameter (52).

6. Single-fluted deep hole drill according to claim 1, **characterised in that** the outwardly curved outline is implemented by at least one straight line (110, 112) and at least one circular arc (54, 82, 102).

7. Single-fluted deep hole drill according to claim 1, **characterised in that** the outer cutting region (40) has a cutting corner (100) at the transition of the cutting edge (30) to the periphery (64) of the drill head (22).

8. Single-fluted deep hole drill according to claim 1 and 7, **characterised in that** the cutting corner (100) is formed by the radius (104) of the circular arc (102) forming the cutting corner (100) being equal to or greater than half the diameter (52) of the single-fluted deep hole drill (20), and the centre (106) being offset outwards in relation to the central axis of the drill (34).

9. Single-fluted deep hole drill according to claim 1, **characterised in that** the number of chip splitters (36, 80) is determined depending on the drill diameter (52).

10. Single-fluted deep hole drill according to claim 1, **characterised in that** the chip splitter (36, 80) has a chip splitter clearance angle (74) of greater than 0° with respect to the central axis of the drill (34).

11. Single-fluted deep hole drill according to claim 10, **characterised in that** the chip splitter clearance angle (74) is determined depending on the material of the workpiece to be drilled.

12. Single-fluted deep hole drill according to claim 10, **characterised in that** the chip splitter clearance angle (74) is in the range of from 8° to 12°.

13. Single-fluted deep hole drill according to claim 1, **characterised in that** the chip splitter position angle (50), which determines the position of the chip splitter (36, 80) in the cutting edge (30), is in an angular range of from 20° to 50° with respect to central axis of the drill (34) and with respect to the drill diameter (52).

14. Single-fluted deep hole drill according to claim 13, **characterised in that** the chip splitter position angle (50) is determined depending on the drill diameter (52).

15. Single-fluted deep hole drill according to claim 1, **characterised in that** the single-fluted deep hole drill (20) comprises a drill head (22) and a drill shaft (24) and that the drill head (22) and the drill shaft (24) are both made of one piece.

16. Single-fluted deep hole drill according to claim 1, **characterised in that** the single-fluted deep hole drill (20) is assembled of a drill head (22) and a drill shaft (24).

17. Single-fluted deep hole drill according to claim 16, **characterised in that** the drill head (22) is replaceable.

18. Single-fluted deep hole drill according to one of claims 16 - 17, **characterised in that** at least the drill head (22) is made of hard metal.

19. Single-fluted deep hole drill according to one of claims 16 - 18, **characterised in that** at least the drill head (22) is at least partially provided with a coating (26).

20. Single-fluted deep hole drill according to one of claims 16 - 19, **characterised in that** the drill head (22) is designed as a support to which at least the cutting edge (30) and/or at least one guide element (37) are attached.

21. Single-fluted deep hole drill according to claim 20, **characterised in that** the cutting edge (30) and/or the at least one guide element (37) are attached interchangeably.

## Revendications

1. Foret 3/4 à une lèvre pour trou profond comprenant une lame (30) dans laquelle est prévu au moins un brise-copeaux (36, 80) matérialisé sous la forme d'une rainure ou d'un gradin et divisant la lame (30) en un segment de lame intérieur (38) et au moins un segment de lame extérieur (40), ledit au moins un segment de lame extérieur (40) présentant un contour incurvé vers l'extérieur, **caractérisé en ce que** le contour incurvé vers l'extérieur est matérialisé par au moins un arc de cercle (54, 82, 102).

2. Foret 3/4 à une lèvre pour trou profond selon la revendication 1, **caractérisé en ce que** la totalité du segment de lame extérieur (40) présente un contour incurvé vers l'extérieur.

3. Foret 3/4 à une lèvre pour trou profond selon la revendication 1, **caractérisé en ce que** le centre (56) de l'au moins un arc de cercle (54, 82) est situé sur l'axe central (34) du foret.

4. Foret 3/4 à une lèvre pour trou profond selon la revendication 3, **caractérisé en ce que** le rayon (58, 84) de l'arc de cercle (54, 82) correspond à la moitié du diamètre (52) du foret.

5. Foret 3/4 à une lèvre pour trou profond selon la revendication 4, **caractérisé en ce que** l'écart (60, 88) entre le centre (56) de l'au moins un arc de cercle (54, 82) et l'extrémité avant de la tête de perçage (22) correspond à la moitié du diamètre (52) du foret.

6. Foret 3/4 à une lèvre pour trou profond selon la revendication 1, **caractérisé en ce que** le contour incurvé vers l'extérieur est matérialisé par au moins une droite (110, 112) et au moins un arc de cercle (54, 82, 102).

7. Foret 3/4 à une lèvre pour trou profond selon la revendication 1, **caractérisé en ce que** le segment de lame extérieur (40) présente un bec (100) à l'intersection entre la lame (30) et le pourtour (64) de la tête de perçage (22).

8. Foret 3/4 à une lèvre pour trou profond selon les revendications 1 et 7, **caractérisé en ce que** le bec (100) résulte du fait que le rayon (104) de l'arc de cercle (102) formant le bec (100) est supérieur ou égal à la moitié du diamètre (52) du foret à une lèvre pour trou profond (20) et du fait que le centre (106) est déporté vers l'extérieur par rapport à l'axe central (34) du foret.

9. Foret 3/4 à une lèvre pour trou profond selon la revendication 1, **caractérisé en ce que** le nombre de brise-copeaux (36, 80) dépend du diamètre (52) du foret.

10. Foret 3/4 à une lèvre pour trou profond selon la revendication 1, **caractérisé en ce que** le brise-copeaux (36, 80) présente un angle de dépouille (74) supérieur à 0° par rapport à l'axe central (34) du foret.

11. Foret 3/4 à une lèvre pour trou profond selon la revendication 10, **caractérisé en ce que** l'angle de dépouille (74) du brise-copeaux dépend du matériau de la pièce à percer.

12. Foret 3/4 à une lèvre pour trou profond selon la revendication 10, **caractérisé en ce que** l'angle de dépouille (74) du brise-copeaux se situe dans la plage de 8° à 12°.

13. Foret 3/4 à une lèvre pour trou profond selon la revendication 1, **caractérisé en ce que** l'angle de position (50) du brise-copeaux, qui établit la position du brise-copeaux (36, 80) dans la lame (30), se situe dans une plage angulaire de 20° à 50° par rapport à l'axe central (34) du foret et eu égard au diamètre (52) du foret.

14. Foret 3/4 à une lèvre pour trou profond selon la revendication 13, **caractérisé en ce que** l'angle de position (50) du brise-copeaux dépend du diamètre (52) du foret.

15. Foret 3/4 à une lèvre pour trou profond selon la revendication 1, **caractérisé en ce que** le foret à une lèvre pour trou profond (20) comprend une tête de perçage (22) et une tige de foret (24) et **en ce que** la tête de perçage (22) et la tige de foret (24) constituées d'une seule pièce.

16. Foret 3/4 à une lèvre pour trou profond selon la revendication 1, **caractérisé en ce que** le foret à une lèvre pour trou profond (20) est un assemblage d'une tête de perçage (22) et d'une tige de foret (24).

17. Foret 3/4 à une lèvre pour trou profond selon la revendication 16, **caractérisé en ce que** la tête de perçage (22) est échangeable.

18. Foret 3/4 à une lèvre pour trou profond selon l'une des revendications 16 et 17, **caractérisé en ce que** la tête de perçage (22), au moins, est constituée d'un métal dur.

19. Foret 3/4 à une lèvre pour trou profond selon l'une des revendications 16 à 18, **caractérisé en ce que** la tête de perçage (22), au moins, est pourvue au moins partiellement d'un revêtement (26).

20. Foret 3/4 à une lèvre pour trou profond selon l'une des revendications 16 à 19, **caractérisé en ce que** la tête de perçage (22) est conçue sous la forme d'un support sur lequel sont disposés au moins la lame (30) et/ou au moins un élément de guidage (37).

21. Foret 3/4 à une lèvre pour trou profond selon la revendication 20, **caractérisé en ce que** la lame (30) et/ou l'au moins un élément de guidage (37) sont disposés de manière échangeable.
